# NEUE EUROPÄISCHE PATENTSCHRIFT

(11) **EP 2 113 692 B2**
(45) Veröffentlichungstag und Bekanntmachung des Hinweises auf die Entscheidung über den Einspruch: **14.09.2022**
(45) Hinweis auf die Patenterteilung: 14.12.2011
(21) Anmeldenummer: 09004906.5
(22) Anmeldetag: 02.04.2009
(51) Int. Cl.: F16K 1/226, F02D 9/04

(54) **Klappenventil**
Flap valve
Soupape à clapet

(30) Priorität: 30.04.2008 DE 202008005992 U
(43) Veröffentlichungstag der Anmeldung: 04.11.2009
(73) Patentinhaber: Friedrich Boysen GmbH & Co. KG, 72213 Altensteig (DE)
(72) Erfinder: Wellner, Friedrich, 66424 Homburg (DE)
(74) Vertreter: Manitz Finsterwald Patent- und Rechtsanwaltspartnerschaft mbB

(56) Entgegenhaltungen:
- EP-A- 0 023 953
- WO-A-2006/003017
- DE-A1- 10 329 336
- DE-A1-102006 048 713
- DE-B- 1 179 049
- DE-B4- 19 526 144
- DE-U1- 9 108 326
- JP-A- H0 791 247
- US-A- 5 988 589
- US-B1- 6 273 119

## Beschreibung

Die vorliegende Erfindung betrifft ein Klappenventil nach Anspruch 1, insbesondere zur Verwendung im Heißbereich von Abgasanlagen für Verbrennungsmotoren, mit einem Gehäuse mit mindestens einer Fluideinlassöffnung und mindestens einer Fluidauslassöffnung, einer im Gehäuse drehbar angeordneten Verschlussklappe, welche ein Drehübertragungsmittel umfasst, welches durch eine Öffnung einer Wand des Gehäuses geführt und mit einem außerhalb des Gehäuses vorgesehenen Betätigungselement drehfest verbindbar ist, und einer zwischen Gehäuse und Drehübertragungsmittel wirksamen Dichtung zur Abdichtung des Gehäuseinneren nach außen, wobei in Richtung des Betätigungselement gesehen weiter außerhalb als die Dichtung angeordnete Mittel, insbesondere Federmittel, vorgesehen sind, durch welche die Dichtung gesehen das Gehäuse und/oder das Drehübertragungsmittel gedrängt wird, und wobei sich die Mittel einerseits an dem Drehübertragungsmittel und andererseits an dem Gehäuse abstützen. Ein derartiges Klappenventil ist beispielsweise aus DE 103 29 336 A1 bekannt. Dokument DE 10 2006 048 713 A1 offenbart eine Ventilvorrichtung, welche als eine Sperrklappe in einem Auspuffkrümmermittelteil einer Brennkraftmaschine eines Kraftfahrzeugs verwendet werden kann. Die Ventilvorrichtung weist ein Ventilgehäuse mit einem Durchgangskanal, eine Ventilklappe zum Öffnen und Schließen des Durchgangskanals, eine quer zum Durchgangskanal und in dem Ventilgehäuse angeordnete Welle, an der die Ventilklappe drehfest angebracht ist, und Lager zur drehbaren und gasdichten Lagerung der Welle auf. Eine Feder positioniert die Welle in axialer Richtung im Ventilgehäuse.

Klappenventile werden bei Abgasanlagen für Verbrennungsmotoren insbesondere eingesetzt, um den Abgasgegendruck motorabhängig zu regeln, beispielsweise abhängig von der Drehzahl. Derartige Klappenventile müssen nach außen abgedichtet werden, damit keine Abgase unkontrolliert nach außen dringen. Besonders wichtig ist eine Abdichtung, wenn ein derartiges Klappenventil vor einem Abgaskatalysator eingesetzt wird, insbesondere im Heißbereich von Abgasanlagen, da dort die Abgase zumindest noch nicht vollständig gereinigt sind.

Die Mittel, durch welche die Dichtung gegen das Gehäuse und/oder das Drehübertragungsmittel gedrängt wird, werden aufgrund der Temperatur der durch die Abgasanlage strömenden Abgase thermisch derart belastet, dass es zu einer beschleunigten Alterung der Mittel kommen kann, wodurch die Lebensdauer der Mittel verkürzt wird.

Der Erfindung liegt die Aufgabe zugrunde, ein Klappenventil der eingangs genannten Art anzugeben, bei welchem das thermische Alterungsverhalten verbessert ist. Insbesondere soll eine hohe Langlebigkeit auch im Heißbereich von Abgasanlagen ermöglicht werden.

Diese Aufgabe wird dadurch gelöst, dass sich die Mittel nicht an der Dichtung abstützen.

Durch die Abstützung der Mittel an dem Drehübertragungsmittel und an dem Gehäuse, jedoch nicht an der Dichtung, kann ein direkter Kontakt, insbesondere ein direkter Wärmeleitkontakt, zwischen den Mitteln und der Dichtung vermieden werden. Dies ist insbesondere deshalb von Vorteil, da die Dichtung aufgrund ihres unmittelbaren Kontaktes mit den durch die Abgasanlage strömenden Abgasen eine hohe Temperatur aufweisen kann. Aufgrund des fehlenden direkten Wärmeleitkontakts zwischen Mitteln und Dichtung kann erreicht werden, dass der Wärmeübertrag von der Dichtung an die Mittel reduziert wird. Die thermische Belastung der Mittel ist folglich geringer, wodurch sich die Lebenserwartung der Mittel erhöht. Die geringere thermische Belastung ist insbesondere bei Mitteln, die sich unter einer Vorspannung befinden und/oder im Betrieb des Klappenventils eine Längenänderung erfahren, von Vorteil.

Durch die beabstandete Anordnung der Mittel von der Dichtung wird die räumliche Distanz der Mittel zu der Dichtung vergrößert. Hierdurch kann erreicht werden, dass der Wärmeübertrag von der Dichtung an die Mittel reduziert wird. Darüber hinaus wird ermöglicht, dass zwischen der Dichtung und den Mitteln ein Hitzeschild angeordnet werden kann, wodurch der Wärmeübertrag an die Mittel weiter reduziert wird.

Gemäß der Erfindung umfasst das Gehäuse einen separaten Gehäuseteil zur Aufnahme der Dichtung umfasst, und die Mittel außerhalb des separaten Gehäuseteils angeordnet sind. Durch den separaten Gehäuseteil kann die Dichtung nach außen abgeschirmt und hierdurch der Wärmeübertrag an die Mittel verringert werden.

Gemäß der Erfindung ist die Dichtung zugleich als Lagermittel zur radialen Lagerung der Verschlussklappe, insbesondere als Gleitlager, ausgebildet. Durch diese Doppel- bzw. Dreifachfunktion der Dichtung können separate Lagermittel eingespart werden.

Nach einer Ausgestaltung der Erfindung stützen sich die Mittel auf der dem übrigen Gehäuse abgewandten Seite des separaten Gehäuseteils ab. Hierdurch wird ermöglicht, kleinbauende Mittel zu verwenden. Alternativ können die Mittel den separaten Gehäuseteil umschließen und sich an einem diesem benachbarten Gehäuseabschnitt des Gehäuses abstützen.

Nach einer anderen Ausgestaltung der Erfindung stützen sich die Mittel über eine Formschlussverbindung an dem Drehübertragungsmittel ab. Durch die Formschlussverbindung kann insbesondere gewährleistet werden, dass die axiale Position der Mittel entlang des Drehübertragungsmittels begrenzt und die Mittel verliersicher am Drehübertragungsmittel gehalten werden. Bevorzugt sind die Mittel unter Druck vorgespannt, so dass das Drehübertragungsmittel nach außen gedrückt wird. Die Formschlussverbindung kann beispielsweise durch einen Sicherungsring, welcher in eine an dem Drehübertragungsmittel ausgebildete, umlaufende Nut eingreift, gebildet sein. Alternativ kann aber auch vorgesehen sein, dass die Mittel selbst in eine an dem Drehübertragungsmittel ausgebildete Vertiefung eingreifen.

Bevorzugt weist die Dichtung zur Drehachse der Verschlussklappe geneigte, ringförmige Schrägflächen auf, die mit entsprechenden Schrägflächen am Gehäuse und/oder am Drehübertragungsmittel zusammenwirken. Hierdurch kann einerseits eine Abdichtung nach außen gewährleistet und andererseits sowohl eine Axial- als auch eine Radiallagerung der Verschlussklappe erreicht werden.

Besonders bevorzugt ist es, wenn in einem Querschnitt durch eine Seite der Dichtung eine Normale auf eine innere Dichtfläche und eine Normale auf eine äußere Dichtfläche der Dichtung parallel zueinander verlaufen, insbesondere zusammenfallen. Hierdurch kann die Abdichtung und die Lagerung verbessert werden.

Nach einer weiteren Ausgestaltung der Erfindung weist das Drehübertragungsmittel zur Ausbildung einer Dichtfläche einen Absatz auf, wobei der Absatz bevorzugt eine zur Drehachse der Verschlussklappe geneigte, ringförmige Außenumfangsfläche aufweist. Über den Absatz des Drehübertragungsmittels kann eine Vorspannung der Mittel derart auf die Dichtung übertragen werden, dass die Dichtung gegen das Gehäuse und/oder das Drehübertragungsmittel gedrängt wird.

Bevorzugt ist zwischen dem Gehäuseinneren und der Dichtung und/oder dem separaten Gehäuseteil und den Mitteln ein Hitzeschild, insbesondere aus Keramik, beispielsweise Zirkondioxid, angeordnet. Durch einen Hitzeschild mit geringem Wärmeleitwert kann ein Wärmeübertrag vom Abgas an weiter außen liegende Bestandteile des Klappenventils weiter verringert werden. Besonders bevorzugt ist es, wenn der Hitzeschild zwischen dem Gehäuseinneren und der Dichtung zugleich als Lagermittel zur radialen Lagerung der Verschlussklappe, insbesondere als Lagerbuchse, ausgebildet ist.

Die Federmittel können als Federspange, Schenkelfeder, Schraubenfeder, Teleskopfeder oder Tellerfeder ausgebildet sein. Jede dieser Varianten hat für sich Vorteile. Insbesondere kann eine Federspange zwei Schenkel aufweisen, welche an einem sonst offenen Ende der Federspange gegeneinander abgestützt sind. Eine Teleskopfeder hat sich als besonders unempfindlich gegenüber Schmutz erwiesen. Anstelle der vorstehend genannten Federn kann aber auch eine andere Feder verwendet werden.

Nach einer weiteren Ausgestaltung der Erfindung sind Mittel vorgesehen sind, durch welche die Dichtung beim Verdrehen der Verschlussklappe nur teilweise mitgedreht wird. Hierdurch reibt die Dichtung auf dem Gehäuse und/oder dem Drehübertragungsmittel, wodurch die gegeneinander gedrängten Elemente aufeinander eingeschliffen werden, so dass sich eine hohe Dichtigkeit ergibt.

Die Erfindung betrifft weiterhin eine Doppelklappe, insbesondere zur Verwendung im Heißbereich von Abgasanlagen für Verbrennungsmotoren, mit zwei jeweils wie vorstehend beschriebenen Klappenventilen, welche in Strömungsrichtung hintereinander angeordnet sind.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: einen Querschnitt durch ein erfindungsgemäßes Klappenventil mit Tellerfeder,
- Fig. 2: einen Schnitt gemäß Linie A-A in Fig. 1,
- Fig. 3: Querschnitte durch erfindungsgemäße Klappenventile mit einer Teleskopfeder bzw. einer Schraubenfeder, und
- Fig. 4: weitere Federvarianten für ein erfindungsgemäßes Klappenventil.

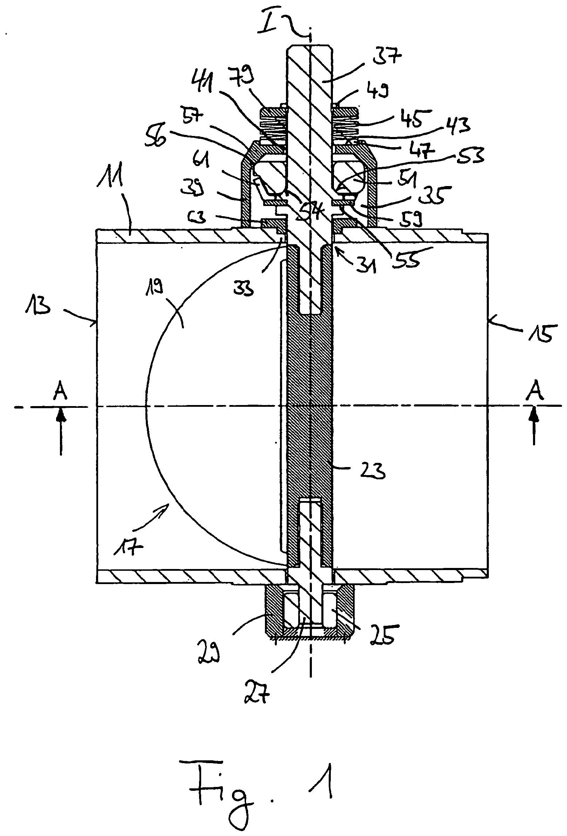

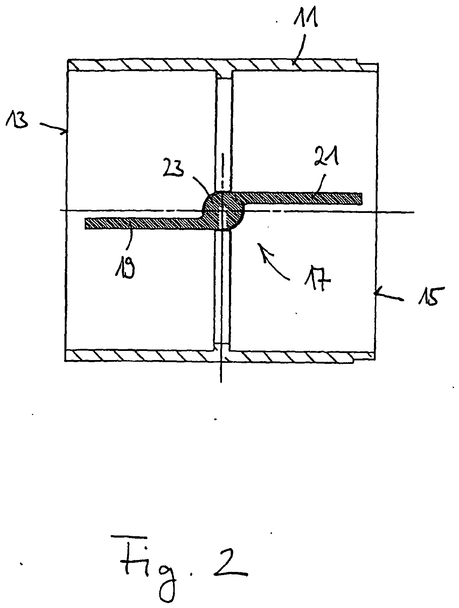

Das in den Fig. 1 und 2 dargestellte Klappenventil umfasst ein Gehäuse 11 mit einer Fluideinlassöffnung 13 und einer Fluidauslassöffnung 15. Im Gehäuse 11 ist eine Verschlussklappe 17 mit zwei Flügeln 19, 21, von denen in Fig. 1 lediglich der Flügel 19 zu sehen ist, zwischen einer ersten Stellung, in welcher die Flügel 19, 21 die Fluidauslassöffnung 15 vollständig verschließen, und einer zweiten Stellung, in welcher die Fluidauslassöffnung 15 vollständig geöffnet ist, drehbar gelagert. In den Fig. 1 und 2 ist die Verschlussklappe 17 jeweils in der zweiten Stellung gezeigt.

Die beiden Flügel 19, 21 der Verschlussklappe 17 sind mit einer Welle 23 der Verschlussklappe 17 drehfest verbunden. Die Welle 23 ist mit ihren beiden Enden durch gegenüberliegende Seiten des Gehäuses 11 geführt. Auf der in Fig. 1 unteren Seite ist ein Radiallager 25 zur Aufnahme des nach unten aus dem Gehäuse 11 heraustretenden unteren Teils 27 der Welle 23 vorgesehen. Das Radiallager 25 ist von einem separaten Lagergehäuse 29 vollständig gasdicht umgeben.

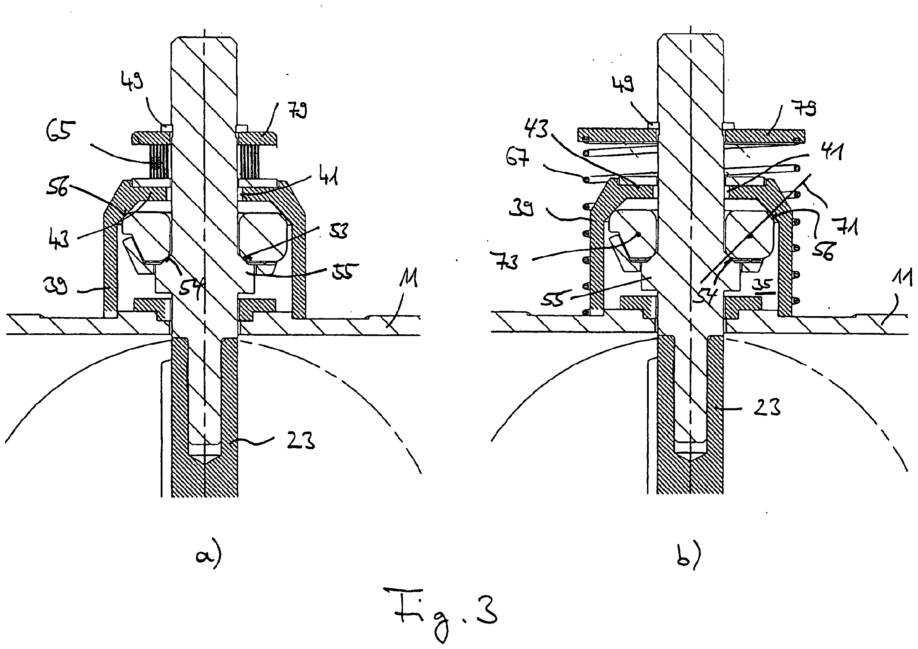

1 Auf der in Fig. 1 oberen Seite ist die Welle 23 durch eine Öffnung 31 einer Wand 33 des Gehäuses 11 geführt. Unmittelbar an die Öffnung 31 schließt ein Lagerraum 35 zur Lagerung des aus dem Gehäuse 11 heraustretenden oberen Teils 37 der Welle 23 an. Der Lagerraum 35 ist von einem separaten Gehäuseteil 39 umgeben, welcher mit dem restlichen Gehäuse 11 gasdicht verschweißt ist. Die Welle 23 durchsetzt den Lagerraum 35 vollständig und ist durch eine Öffnung 41 (Fig. 3a) in einer oberen Wand 43 des separaten Gehäuseteils 39 nach außen geführt.

Außerhalb des Lagerraums 35 ist eine auf Druck vorgespannte Tellerfeder 45 vorgesehen, die eine mittige Öffnung aufweist, durch welche die Welle 23 geführt ist. Die Tellerfeder 45 stützt sich einerseits über eine Keramikscheibe 47 an der oberen Wand 43 des separaten Gehäuseteils 39 und andererseits über eine Scheibe 79 und über einen Sicherungsring 49, der in eine an der Welle 23 ausgebildete, umlaufende Nut eingreift, an der Welle 23 ab. Über das außerhalb des Gehäuses 11, insbesondere außerhalb des separaten Gehäuseteils 39 und jenseits der Tellerfeder 45 liegende Ende des oberen Teils 37 der Welle 23 ist die Welle 23 betätigbar.

Innerhalb des Lagerraums 35 ist ein von der Tellerfeder 45 beabstandet angeordneter Dichtungsring 51 zur Abdichtung des Gehäuseinneren nach außen vorgesehen. Durch die vorgespannte Tellerfeder 45 wird eine ringförmige Außenumfangsfläche 53 (Fig. 3a) eines Absatzes 55 (Fig. 3a) der Welle 23 gegen eine innere Dichtfläche 54 des Dichtungsrings 51 und eine äußere Dichtfläche 56 gegen einen ringförmigen Wandabschnitt 57 des separaten Gehäuseteils 39 gedrängt. Die Außenumfangsfläche 53 und der Wandabschnitt 57 sowie die innere Dichtfläche 54 und die äußere Dichtfläche 56 sind jeweils um 45° zur Drehachse der Verschlussklappe 17 geneigt, wobei grundsätzlich jedoch jeweils auch andere Neigungswinkel möglich sind. Darüber hinaus bewirkt die beschriebene Ausgestaltung, dass der Dichtungsring 51 zugleich als Gleitlager zur axialen und radialen Lagerung der Welle 23 der Verschlussklappe 17 wirkt.

Der Dichtungsring 51 besitzt im Querschnitt durch eine Seite gesehen eine quadratische Grundform mit abgeschrägten Ecken, wobei eine Normale auf die innere Dichtfläche 54 und eine Normale auf die äußere Dichtfläche 56 zusammenfallen, so dass die beiden Druckpunkte, an denen der Dichtungsring 51 gegen die Welle 23 und das separate Gehäuseteil 39 gedrängt wird, auf einer gemeinsamen Normalen 71 (Fig. 3b), bezüglich einer mittleren Umfangslinie 73 (Fig. 3b) des Dichtungsrings 51 gegenüberliegend angeordnet sind, wodurch eine besonders gute Abdichtung und Lagerung erreicht werden kann.

Die Welle 23 umfasst ferner zwei bezüglich der Drehachse der Verschlussklappe 17 gegenüberliegend angeordnete Mitnehmer 61, die jeweils in eine Winkelausnehmung des Dichtungsringes 51 eingreifen, um den Dichtungsring 51 beim Verdrehen der Welle 37 teilweise mitzudrehen. Die Größe der Winkelausnehmung bestimmt dabei den Winkelbereich, über welchen der Dichtungsring 51 nicht mit der Welle 37 mitdreht.

Zwischen dem Inneren des Gehäuses 11 und dem Dichtungsring 51 ist eine Keramikscheibe 63 angeordnet, die ebenso wie die bereits vorstehend erwähnte, zwischen der oberen Wand 43 des separaten Gehäuseteils 39 und der Tellerfeder 45 angeordnete Keramikscheibe 47, als Hitzeschild ausgebildet ist, um einen Wärmeübertrag von dem Abgas aus dem Gehäuseinneren an jeweils hinter dem Hitzeschild befindliche Bestandteile des Klappenventils zu verringern. Die Keramikscheibe 63 zwischen dem Gehäuseinneren und dem Dichtungsring 51 ist dabei derart ausgebildet, dass sie zugleich als Lagerbuchse zur radialen Lagerung der Verschlussklappe 17 wirkt.

Im Gegensatz zu dem Klappenventil gemäß Fig. 1 wird bei dem Klappenventil gemäß Fig. 3a anstelle einer Tellerfeder eine Teleskopfeder 65 verwendet. Ansonsten entspricht die Ausbildung des Klappenventils gemäß Fig. 3a jedoch der Ausbildung des Klappenventils gemäß Fig. 1.

Fig. 3b zeigt ein weiteres Ausführungsbeispiel eines erfindungsgemäßen Klappenventils, wobei jedoch lediglich die Abweichungen dieses Ausführungsbeispiels gegenüber den in den Fig. 1 und 3 dargestellten Ausführungsbeispielen erläutert werden sollen. Das Ausführungsbeispiel gemäß Fig. 3b umfasst anstelle einer Tellerfeder bzw. einer Teleskopfeder eine Schraubenfeder 67. Im Gegensatz zu den in den Fig. 1 und 3a gezeigten Federn stützt sich die Schraubenfeder 67 zwar an der Welle 23, nicht jedoch an der oberen Wand 43 des separaten Gehäuseteils 39 ab. Vielmehr ist der Innendurchmesser der Schraubenfeder 67 derart gewählt, dass die Schraubenfeder 67 das separate Gehäuseteil 39 umschließt und sich an einem benachbarten Gehäuseabschnitt des Gehäuses 11 abstützt.

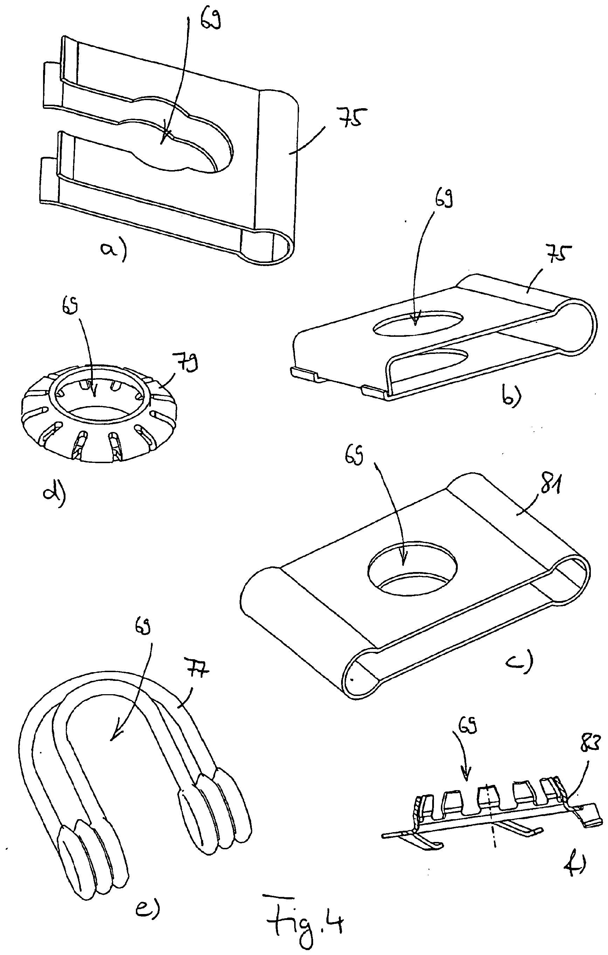

Anstelle der vorstehend beschriebenen Federn 45, 65, 67 können beispielsweise auch die in Fig. 4 gezeigten Federn 75, 77, 79, 81, 83 verwendet werden, wobei die Welle 23 jeweils durch eine Öffnung 69 der Federn 45, 65, 67, 75, 77, 79, 81, 83 geführt ist, und wobei die Federn 75, 77, 79, 81 jeweils am separaten Gehäuseteil 39 und über den Sicherungsring 49, insbesondere ohne eine Scheibe 79, an der Welle 23 abgestützt sind.

Die in Fig. 4a gezeigte Federspange 75 umfasst zwei im unbelasteten Zustand im Wesentlichen parallel zueinander verlaufende, flächig ausgebildete Schenkel. Durch die flächige Ausbildung der Schenkel kann eine sichere Abstützung nach beiden Seiten, sowohl gegen die Welle 23 als auch gegen den separaten Gehäuseteil 39 gewährleistet werden. Um die Federspange 75 von Fig. 4a unter Druck vorzuspannen, werden die beiden Schenkel an dem offenen Ende der Federspange 75 zusammengedrückt.

Die in Fig. 4b gezeigte Federspange 75 unterscheidet sich von der in Fig. 4a gezeigten Federspange dadurch, dass die beiden Schenkel an dem sonst offenen Ende der Federspange 75 gegeneinander abgestützt sind. Um die Federspange 75 von Fig. 4b unter Druck vorzuspannen, werden die beiden Schenkel mittig zusammengedrückt.

Die in Fig. 4c gezeigte Feder 81 unterscheidet sich von der in Fig. 4b gezeigten Federspange dadurch, dass die beiden Schenkel an dem sonst offenen Ende einer Federspange fest miteinander verbunden sind.

Fig. 4d zeigt eine Feder 79, die nach Art einer Tellerfeder ausgebildet ist. Die Feder 79 weist bezüglich einer Achse der Öffnung 69 eine rotationssymmetrische Grundform mit zwei gegenüberliegenden Abstützflächen und einem dazwischen angeordneten umlaufenden, nach außen ausgebauchten, federelastischen Bereich, wobei die Rotationssymmetrie durch um die Achse der Öffnung 69 regelmäßig verteilte, im ausgebauchten Bereich ausgebildete Ausnehmungen unterbrochen ist.

Die in Fig. 4e gezeigte Schenkelfeder 77 umfasst zwei zylindrische Drehfedern, deren freie Enden derart miteinander verbunden sind, dass ein gemeinsamer oberer Schenkel und ein gemeinsamer unterer Schenkel ausgebildet ist, mit denen die Schenkelfeder 77 am separaten Gehäuseteil 39 und über den Sicherungsring 49 an der Welle 23 abstützbar ist.

Fig. 4f zeigt eine Feder 83, die auf einer unteren Seite symmetrisch um eine Achse verteilt angeordnete Federplättchen umfasst, mit denen die Feder 83 am separaten Gehäuseteil 39 abstützbar ist. Auf einer oberen Seite der Feder 83 sind symmetrisch um die Achse verteilt angeordnete Stützkrallen vorgesehen, die zur Abstützung der Feder 83 an der Welle 23 in eine entsprechende Vertiefung oder Nut der Welle 23 eingreifen.

In den dargestellten Ausführungsbeispielen sind die Federmittel jeweils als Druckfeder ausgeführt. Grundsätzlich ist es jedoch auch möglich, dass die Mittel unter Zug vorgespannt sind. Beispielsweise könnte eine Schraubenfeder unter Zug vorgespannt und mit einem ersten Ende an der oberen Wand des Gehäuses 11 und mit einem zweiten Ende an der Welle 23 befestigt sein.

Durch die erfindungsgemäße Abstützung der Mittel an dem Gehäuse und der Welle und nicht an der Dichtung wird erreicht, dass die thermische Belastung für die Mittel verringert werden kann. Dieser Effekt kann durch die beabstandete Anordnung der Mittel von der Dichtung und die Anordnung der Mittel außerhalb des separaten Gehäuseteils noch verstärkt werden.

### Bezugszeichenliste

- 11: Gehäuse
- 13: Fluideinlassöffnung
- 15: Fluidauslassöffnung
- 17: Verschlussklappe
- 19: Flügel
- 21: Flügel
- 23: Welle
- 25: Radiallager
- 27: unterer Teil von 23
- 29: Lagergehäuse
- 31: Öffnung
- 33: Wand
- 35: Lagerraum
- 37: oberer Teil von 23
- 39: separates Gehäuseteil
- 41: Öffnung
- 43: obere Wand
- 45: Tellerfeder
- 47: Keramikscheibe
- 49: Sicherungsring
- 51: Dichtungs- und Lagerring
- 53: Außenumfangsfläche
- 54: innere Dichtfläche
- 55: Absatz
- 56: äußere Dichtfläche
- 57: Wandabschnitt
- 59: Sicherungsscheibe
- 61: Mitnehmer
- 63: Keramikscheibe
- 65: Teleskopfeder
- 67: Schraubenfeder
- 69: Öffnung
- 71: Normale
- 73: mittlere Umfangslinie
- 75: Federspange
- 77: Schenkelfeder
- 79: Tellerfeder
- 81: Federspange
- 83: Feder
- I: Drehachse

## Patentansprüche

1. Klappenventil, insbesondere zur Verwendung im Heißbereich von Abgasanlagen für Verbrennungsmotoren, mit einem Gehäuse (11, 39) mit mindestens einer Fluideinlassöffnung (13) und mindestens einer Fluidauslassöffnung (15), einer im Gehäuse (11, 39) drehbar angeordneten Verschlussklappe (17), welche ein Drehübertragungsmittel (23) umfasst, welches durch eine Öffnung (31) in einer Wand (33) des Gehäuses (11, 39) geführt und mit einem außerhalb des Gehäuses (11, 39) vorgesehenen Betätigungselement drehfest verbindbar ist, und einer zwischen Gehäuse (11) und Drehübertragungsmittel (23) wirksamen Dichtung (51) zur Abdichtung des Gehäuseinneren nach außen, wobei in Richtung des Betätigungselements gesehen weiter außerhalb als die Dichtung (51) angeordnete Mittel (45, 65, 67, 75, 77, 81, 83), insbesondere Federmittel, vorgesehen sind, durch welche die Dichtung (51) gegen das Gehäuse (11, 39) und/oder das Drehübertragungsmittel (23) gedrängt wird, und wobei sich die Mittel einerseits an dem Drehübertragungsmittel (23) und andererseits an dem Gehäuse (11, 39) abstützen,
**dadurch gekennzeichnet,**
**dass** sich die Mittel (45, 65, 67, 75, 77, 81, 83) nicht an der Dichtung (51) abstützen, dass die Dichtung (51) zugleich als Lagermittel zur radialen Lagerung der Verschlussklappe (17), insbesondere als Gleitlager, ausgebildet ist, wobei das Gehäuse (11, 39) einen separaten Gehäuseteil (39) zur Aufnahme der Dichtung (51) umfasst und die Mittel (45, 65, 67, 75, 77, 81, 83) außerhalb des separaten Gehäuseteils (39) angeordnet sind.

2. Klappenventil nach Anspruch 1,
**dadurch gekennzeichnet,**
**dass** sich die Mittel (45, 65, 67, 75, 77, 81, 83) auf der dem übrigen Gehäuse (11) abgewandten Seite des separaten Gehäuseteils (39) abstützen.

3. Klappenventil nach Anspruch 1,
**dadurch gekennzeichnet,**
**dass** die Mittel (45, 65, 67, 75, 77, 81, 83) den separaten Gehäuseteil (39) umschließen und sich an einem diesem benachbarten Gehäuseabschnitt des Gehäuses (11, 39) abstützen.

4. Klappenventil nach zumindest einem der vorstehenden Ansprüche,
**dadurch gekennzeichnet,**
**dass** sich die Mittel (45, 65, 67, 75, 77, 81, 83) über eine Formschlussverbindung an dem Drehübertragungsmittel (23) abstützen.

5. Klappenventil nach zumindest einem der vorstehenden Ansprüche,
**dadurch gekennzeichnet,**
**dass** die Dichtung (51) zugleich als Lagermittel zur axialen Lagerung der Verschlussklappe (17), insbesondere als Gleitlager, ausgebildet ist.

6. Klappenventil nach Anspruch 5,
**dadurch gekennzeichnet,**
**dass** die Dichtung (51) zur Drehachse der Verschlussklappe (17) geneigte, ringförmige Schrägflächen aufweist, die mit entsprechenden Schrägflächen (53, 57) am Gehäuse (11, 39) und/oder am Drehübertragungsmittel (23) zusammenwirken.

7. Klappenventil nach Anspruch 6,
**dadurch gekennzeichnet,**
**dass** in einem Querschnitt durch eine Seite der Dichtung (51) eine Normale (71) auf eine innere Dichtfläche und eine Normale (71) auf eine äußere Dichtfläche der Dichtung (51) parallel zueinander verlaufen, insbesondere zusammenfallen.

8. Klappenventil nach zumindest einem der vorstehenden Ansprüche,
**dadurch gekennzeichnet,**
**dass** das Drehübertragungsmittel (23) zur Ausbildung einer Dichtfläche einen Absatz (55) aufweist, wobei der Absatz (55) bevorzugt eine zur Drehachse der Verschlussklappe (17) geneigte, ringförmige Außenumfangsfläche (53) aufweist.

9. Klappenventil nach zumindest einem der vorstehenden Ansprüche,
**dadurch gekennzeichnet,**
**dass** zwischen dem Gehäuseinneren und der Dichtung (51) und/oder dem separaten Gehäuseteil (39) und den Mitteln (45, 65, 67, 75, 77, 81, 83) ein Hitzeschild (47, 63), insbesondere aus Keramik, angeordnet ist.

10. Klappenventil nach Anspruch 9,
**dadurch gekennzeichnet,**
**dass** der Hitzeschild (63) zwischen dem Gehäuseinneren und der Dichtung (51) zugleich als Lagermittel zur radialen Lagerung der Verschlussklappe (17), insbesondere als Lagerbuchse, ausgebildet ist.

11. Klappenventil nach zumindest einem der vorstehenden Ansprüche,
**dadurch gekennzeichnet,**
**dass** die Federmittel als Federspange (75), Schenkelfeder (77), Schraubenfeder (67), Teleskopfeder (65) oder Tellerfeder (45) ausgebildet sind.

12. Klappenventil nach zumindest einem der vorstehenden Ansprüche,
**dadurch gekennzeichnet,**
**dass** Mittel (61) vorgesehen sind, durch welche die Dichtung (51) beim Verdrehen der Verschlussklappe (17) nur teilweise mitgedreht wird.

13. Doppelklappe, insbesondere zur Verwendung im Heißbereich von Abgasanlagen für Verbrennungsmotoren, mit zwei jeweils nach zumindest einem der vorhergehenden Ansprüche ausgebildeten Klappenventilen, welche in Strömungsrichtung hintereinander angeordnet sind.

## Claims

1. A flap valve, in particular for use in the hot region of exhaust gas systems for internal combustion engines, having a housing (11, 39) with at least one fluid inlet opening (13) and at least one fluid outlet opening (15), having a cover flap (17) which is rotatably arranged in the housing (11, 39) and which comprises a rotation transmission means (23) which is led through an opening (31) in a wall (33) of the housing (11, 39) and which is rotationally fixedly connectable to an actuation element provided outside the housing (11, 39), and having a seal (51) acting between the housing (11) and the rotation transmission means (23) for outwardly sealing the housing interior, wherein means (45, 65, 67, 75, 77, 81, 83), in particular spring means, are provided further outwardly than the seal (51), viewed in the direction of the actuation element, by which means the seal (51) is urged towards the housing (11, 39) and/or towards the rotation transmission means (23), and wherein the means are supported at the rotation transmission means (23), on the one hand, and at the housing (11, 39), on the other hand,
**characterised in that**
the means (45, 65, 67, 75, 77, 81, 83) are not supported at the seal (51), **in that** the seal (51) is simultaneously formed as a bearing means for the radial bearing of the cover flap (17), in particular as a slide bearing, with the housing (11, 39) comprising a separate housing part (39) for receiving the seal (51) and the means (45, 65, 67, 75, 77, 81, 83) being arranged outside the separate housing part (39).

2. A flap valve in accordance with claim 1,
**characterised in that**
the means (45, 65, 67, 75, 77, 81, 83) are supported on the side of the separate housing part (39) remote from the remaining housing (11).

3. A flap valve in accordance with claim 1,
**characterised in that**
the means (45, 65, 67, 75, 77, 81, 83) surround the separate housing part (39) and are supported at a housing section of the housing (11, 39) adjacent thereto.

4. A flap valve in accordance with at least one of the preceding claims,
**characterised in that**
the means (45, 65, 67, 75, 77, 81, 83) are supported at the rotation transmission means (23) via a form-fitting connection.

5. A flap valve in accordance with at least one of the preceding claims,
**characterised in that**
the seal (51) is simultaneously formed as a bearing means for the axial bearing of the cover flap (17), in particular as a slide bearing.

6. A flap valve in accordance with claim 5,
**characterised in that**
the seal (51) has ring-shaped slanted surfaces which are inclined towards the axis of rotation of the cover flap (17) and which cooperate with corresponding slanted surfaces (53, 57) at the housing (11, 39) and/or at the rotation transmission means (23).

7. A flap valve in accordance with claim 6,
**characterised in that**,
in a cross-section through a side of the seal (51), one normal (71) runs on an inner sealing surface and one normal (71) runs on an outer sealing surface of the seal (51) parallel to one another and in particular coincide.

8. A flap valve in accordance with at least one of the preceding claims,
**characterised in that**
the rotation transmission means (23) has a shoulder (55) for forming a sealing surface, with the shoulder (55) preferably having a ring-shaped outer peripheral surface (53) inclined towards the axis of rotation of the cover flap (17).

9. A flap valve in accordance with at least one of the preceding claims,
**characterised in that**
a heat shield (47, 63), in particular from a ceramic material, is arranged between the housing interior and the seal (51) and/or the separate housing part (39) and the means (45, 65, 67, 75, 77, 81, 83).

10. A flap valve in accordance with claim 9,
**characterised in that**
the heat shield (63) between the housing interior and the seal (51) is simultaneously formed as a bearing means for the radial bearing of the cover flap (17), in particular as a bearing bushing.

11. A flap valve in accordance with at least one of the preceding claims,
**characterised in that**
the spring means are configured as a spring clip (75), a leg spring (77), a helical spring (67), a telescopic spring (65) or a plate spring (45).

12. A flap valve in accordance with at least one of the preceding claims,
**characterised in that**
means (61) are provided by which the seal (51) is only partly rotated along on the rotation of the cover flap (17).

13. A double flap, in particular for use in the hot region of exhaust gas systems for internal combustion engines, having two flap valves which are each configured in accordance with at least one of the preceding claims and which are arranged behind one another in the flow direction.

## Revendications

1. Vanne à clapet, en particulier pour l'utilisation dans la région chaude d'installations de gaz d'échappement pour moteurs à combustion interne, comprenant un boîtier (11, 39) avec au moins une ouverture d'entrée de fluide (13) et au moins une ouverture de sortie de fluide (15), un clapet obturateur (17) agencé en rotation dans le boîtier (11, 39), qui comprend un moyen de transmission de rotation (23), lequel est guidé à travers une ouverture (31) dans une paroi (33) du boîtier (11, 39) et est susceptible d'être relié solidairement en rotation avec un élément d'actionnement prévu à l'extérieur du boîtier (11, 39), et un joint (51) actif entre le boîtier (11) et le moyen de transmission de rotation (23) pour étancher l'intérieur du boîtier vis-à-vis de l'extérieur,
dans laquelle
il est prévu des moyens (45, 65, 67, 75, 77, 81, 83), en particulier des moyens à ressort, qui, vus en direction de l'élément d'actionnement, sont agencés plus à l'extérieur que le joint (51), grâce auxquels le joint (51) est poussé contre le boîtier (11, 39) et/ou contre le moyen de transmission de rotation (23), et
lesdits moyens s'appuient d'une part contre le moyen de transmission de rotation (23) et d'autre part contre le boîtier (11, 39),
**caractérisée en ce que**
les moyens (45, 65, 67, 75, 77, 81, 83) ne s'appuient pas contre le joint (51),
le joint (51) est réalisé simultanément à titre de moyen formant palier pour le montage radial du clapet obturateur (17), en particulier à titre de palier à coulissement,
le boîtier (11, 39) comprend une partie de boîtier séparée (39) pour loger le joint (51), et
les moyens (45, 65, 67, 75, 77, 81, 83) sont agencés à l'extérieur de la partie de boîtier séparée (39).

2. Vanne à clapet selon la revendication 1,
**caractérisée en ce que**
les moyens (45, 65, 67, 75, 77, 81, 83) s'appuient sur le côté, détourné du reste du boîtier (11), de la partie de boîtier séparée (39).

3. Vanne à clapet selon la revendication 1,
**caractérisée en ce que**
les moyens (45, 65, 67, 75, 77, 81, 83) entourent la partie de boîtier séparée (39) et s'appuient sur un tronçon, voisin de celle-ci, du boîtier (11, 39).

4. Vanne à clapet selon l'une au moins des revendications précédentes,
**caractérisée en ce que**
les moyens (45, 65, 67, 75, 77, 81, 83) s'appuient sur le moyen de transmission de rotation (23) via une liaison à coopération de formes.

5. Vanne à clapet selon l'une au moins des revendications précédentes,
**caractérisée en ce que**
le joint (51) est réalisé simultanément à titre de moyen formant palier pour le montage axial du clapet obturateur (17), en particulier à titre de palier à coulissement.

6. Vanne à clapet selon la revendication 5,
**caractérisée en ce que**
le joint (51) comporte des surfaces obliques annulaires, inclinées par rapport à l'axe de rotation du clapet obturateur (17), qui coopèrent avec des surfaces obliques correspondantes (53, 57) sur le boîtier (11, 39) et/ou sur le moyen de transmission de rotation (23).

7. Vanne à clapet selon la revendication 6,
**caractérisée en ce que**, dans une coupe transversale à travers un côté du joint (51), une normale (71) à une surface d'étanchéité intérieure et une normale (71) à une surface d'étanchéité extérieure du joint (51) s'étendent parallèlement l'une à l'autre, et sont en particulier coïncidentes.

8. Vanne à clapet selon l'une au moins des revendications précédentes,
**caractérisée en ce que**
le moyen de transmission de rotation (23) comprend un talon (55) pour la réalisation d'une surface d'étanchéité, ledit talon (55) présentant de préférence une surface périphérique extérieure (53) de forme annulaire inclinée par rapport à l'axe de rotation du clapet obturateur (17).

9. Vanne à clapet selon l'une au moins des revendications précédentes,
**caractérisée en ce que**
un bouclier thermique (47, 63), en particulier en céramique, est agencé entre l'intérieur du boîtier et le joint (51) et/ou entre la partie de boîtier séparée (39) et les moyens (45, 65, 67, 75, 77, 81, 83).

10. Vanne à clapet selon la revendication 9,
**caractérisée en ce que**
le bouclier thermique (63) entre l'intérieur du boîtier et le joint (51) est réalisé simultanément à titre de moyen formant palier pour le montage radial du clapet obturateur (17), en particulier à titre de douille-palier.

11. Vanne à clapet selon l'une au moins des revendications précédentes,
**caractérisée en ce que**
les moyens à ressort sont réalisés sous forme de pince-ressort (75), de ressort à bras (77), de ressort à boudin (67), de ressort télescopique (65) ou de rondelle-ressort (45).

12. Vanne à clapet selon l'une au moins des revendications précédentes,
**caractérisée en ce que**
il est prévu des moyens (61) grâce auxquels le joint (51) est entraîné seulement partiellement conjointement en rotation lors de la rotation du clapet obturateur (17).

13. Double clapet, en particulier pour l'utilisation dans la région chaude d'installations de gaz d'échappement pour moteurs à combustion interne, comprenant deux vannes à clapet réalisées chacune selon l'une au moins des revendications précédentes, qui sont agencées l'une derrière l'autre en direction d'écoulement.
